# EUROPEAN PATENT APPLICATION

(11) **EP 3 522 342 A1**
(43) Date of publication of application: **07.08.2019**
(21) Application number: 17854521.6
(22) Date of filing: 11.07.2017
(51) Int. Cl.: H02K 7/116

(54) **GEAR DRIVING DEVICE FOR AUTOMOTIVE MOVABLE PARTS**

(30) Priority: 29.09.2016 CN 201621092798 U
(71) Applicant: Guangdong Zhaoqing L & V Co. Ltd, Zhaoqing, Guangdong 526238 (CN)
(72) Inventor: XU, Jianping, Zhaoqing Guangdong 526238 (CN); YANG, Qingchun, Zhaoqing Guangdong 526238 (CN); JIANG, Yuan, Zhaoqing Guangdong 526238 (CN); QIU, Xianghuai, Zhaoqing Guangdong 526238 (CN)
(74) Representative: Banzer, Hans-Jörg
(86) International application number: PCT/CN2017/092460
(87) International publication number: WO 2018/059067

(57) **Abstract**

Disclosed is a gear driving device for automotive movable parts. The gear driving device comprises a motor (100) and a driver gearbox (200). The driver gearbox comprises multiple stages of planetary gear assemblies (1, 2) connected in series and a gear assembly (3) with few teeth number difference. A first-stage planetary gear assembly in the multiple stages of planetary gear assemblies is connected to the motor; and the last-stage planetary gear assembly in the multiple stages of planetary gear assemblies is connected to the gear assembly with few teeth number difference. The gear driving device has the advantages of small volume, light weight and high working efficiency.

## Description

### Technical Field

The present invention relates to the technical field of automobile, in particular to automotive movable parts, such as the running board. More specifically, the present invention relates to a gear drive device for driving movable parts, such as the running board, of the automobile.

### Background Art

At present, in many types of automobile, the chassis is provided with a running board that is installed below the door for passengers to get on/off the automobile. The running board is usually arranged to be movable by means of a telescopic mechanism so as to stretch out when in use, and retract under the chassis when not. In this way, the space occupied by the automobile is reduced and the risk of scraping other vehicles or pedestrians is avoid on the one hand, and the aesthetic appearance of the entire automobile is retained on the other hand.

For this purpose, the automobile has a driving device, especially gear driving device, for driving the running board. A known driving device usually comprises multiple stages of worm and gear assembly. This driving device is intended to transfers movement to the running board through cooperation between worm and gear, and is capable of self-locking to maintain position of the running board when the movement is stopped.

However, the known driving devices usually have large volume and weight, as well as a low working efficiency.

### Summary of the Invention

The present invention aims to solve the above problems in the prior art, and proposes a gear driving device for driving automotive movable parts, especially the running board.

According to the present invention, the gear driving device for automotive movable parts comprises a motor and a driver gearbox, wherein the driver gearbox comprises several stages of planetary gear assemblies connected in series and a small tooth difference gear assembly. A first stage planetary gear assembly in the multiple stages of planetary gear assemblies is connected to the motor; and the last stage planetary gear assembly in the multiple stages of planetary gear assemblies is connected to the small tooth difference gear assembly.

The gear driving device of the present invention replaces worm and gear with multiple stages of planetary gear assemblies, and achieves the self-locking function with the small tooth difference gear assembly. In this way, the gear driving device has the advantages of small volume, light weight and high working efficiency.

The gear driving device according to the present invention further includes the following advantageous technical features:
- said last stage planetary gear assembly has a planetary carrier in the form of a disc, a plurality of gears arranged circumferentially on one surface of the planetary carrier and an output shaft on the opposite surface, the output shaft having at a free end an eccentric shaft section offset relative to the centre of the planetary carrier, the eccentric shaft section being directly connected to said small tooth difference gear assembly;
- a liner is arranged between said small tooth difference gear assembly and said last stage planetary gear assembly, the liner being placed on the output shaft of the last stage planetary gear assembly, and abutting/bearing against the planetary carrier of the last stage planetary gear assembly;
- said liner is formed by an oil bearing;
- said small tooth difference gear assembly includes a fixed gear, a movable gear, and a planetary gear engaged simultaneously to the fixed gear and the movable gear, wherein an output shaft of the movable gear is supported by an installing bearing on a housing support of the small tooth difference gear assembly;
- said installing bearing is a composite bearing.
- said fixed gear has 22 teeth; said movable gear has 23 teeth; and said planetary gear has 20 teeth;
- said movable part is the running board or a tonneau cover;
- said driver gearbox is made of metal material or plastic material; and
- said motor is an electric motor.

### Brief Description of Drawings

In the following, a preferable embodiment of the present invention will be described with reference to the drawings. In which:
Fig. 1 is an exploded perspective view of the preferable embodiment of the gear driving device of the present invention; and
Fig. 2 is a sectional view of the driver gearbox in Fig. 1 in an assembled state.

### Detailed Embodiments

The gear driving device of the present invention comprises a motor 100 and a driver gearbox 200 connected to the motor 100, the driver gearbox 200 is configured to transform and transfer rotation of an output shaft of the motor 100 to an actuator such as a telescoping mechanism, which allows an automotive movable part connected therewith to extend and retract relative to the body of the automobile. The movable part may be in particular a running board or a tonneau cover.

According to a basic feature of the present invention, the driver gearbox 200 comprises several stages of planetary gear assemblies connected in series and a small tooth difference gear assembly. A first stage planetary gear assembly in the stages of planetary gear assemblies is to be connected with the motor; and the last stage planetary gear assembly in the stages of planetary gear assemblies is to be connected with the small tooth difference gear assembly.

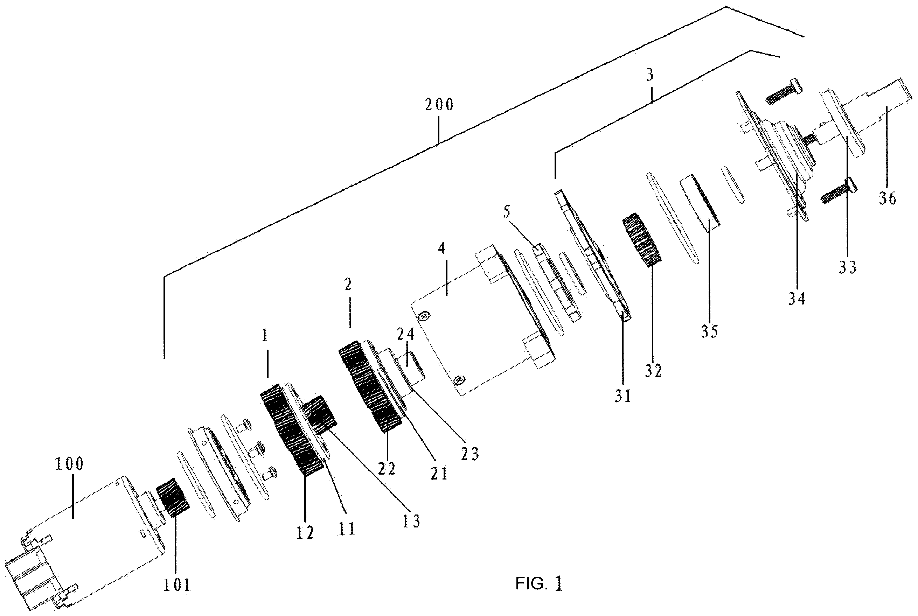

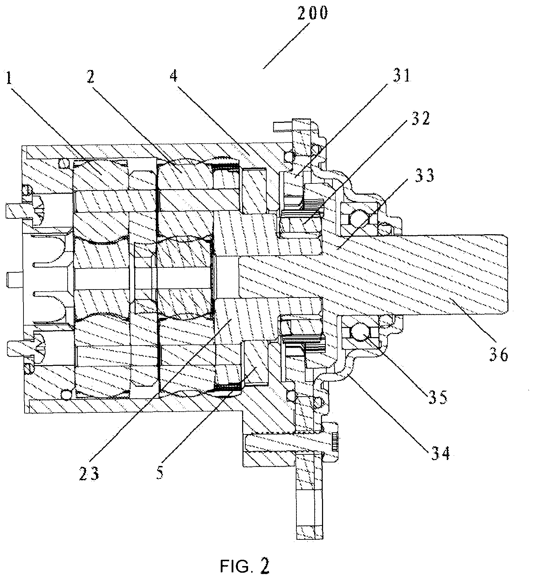

In the preferable embodiment shown on Figs. 1 and 2, the driver gearbox 200 comprises two stages of planetary gear assemblies, i.e. a first stage planetary gear assembly 1 and a second stage planetary gear assembly 2. Said two planetary gear assemblies 1 and 2 are connected to one another and installed in a cylindrical housing 4 of the driver gearbox 200, as shown in Fig. 2.

The first stage planetary gear assembly 1 comprises a disc shaped planetary carrier 11 and a plurality of gears 12 arranged on a side of the planetary carrier 11. These gears 12 are arranged at intervals in the circumferential or peripheral direction of the planetary carrier 11, and may come into engagement with a gear 101 fixed on an output shaft of the motor 100, so as to receive and transform or transfer rotation of the output shaft of the motor 100.

The second stage planetary gear assembly 2 comprises a disc shaped planetary carrier 21 and a plurality of gears 22 arranged on a side of the planetary carrier 21. These gears 12 are arranged at intervals in the circumferential or peripheral direction of the planetary carrier 21, and may come into engagement with a output gear 13 fixed on the other side of the planetary carrier 11 of the first stage planetary gear assembly 1, so as to receive and transform or transfer rotation of the first stage planetary gear assembly 1.

As shown in Figs. 1 and 2, as the last stage planetary gear assembly, at the other side of the planetary carrier 21 of the second stage planetary gear assembly 2, an output shaft 23 is disposed. According to a preferable embodiment of the present invention, the output shaft 23 has a through hole extending in the axial direction (i.e. left-right direction in Fig. 2) and being concentric with the planetary carrier 2. A free end of the output shaft 23 comprises an eccentric shaft section 24 offset relative to the centre of the planetary carrier 21. The eccentric shaft section 24 is used for direct connection with a small tooth difference gear assembly 3. This will be described in details in the following.

Still referring to Figs. 1 and 2, the small tooth difference gear assembly 3 of the present invention comprises a fixed gear 31, a movable gear 33, and a planetary gear 32 engaged simultaneously to the fixed gear 31 and the movable gear 33. As shown in the figures, the fixed gear 31 and the movable gear 33 are gears with inner teeth, while the planetary gear 32 has outer teeth engaged with the inner teeth. As an example, said fixed gear 31 has 22 teeth; said movable gear 33 has 23 teeth; and said planetary gear 32 has 20 teeth.

As can be seen from Fig. 2, the fixed gear 31 of the small tooth difference gear assembly 3 is fixed to an axial end of a housing support 34 of the small tooth difference gear assembly 3, such that the planetary gear 32 is sandwiched between the fixed gear 31 and the movable gear 33 installed near the other axial end of the housing support 34. The movable gear 33 and the planetary gear 32 are thus received within the housing support 34.

The planetary gear 32 is directly fit on the eccentric shaft section 24 of the output shaft 23 of the second stage planetary gear assembly 2 via a bearing. In this way, the small tooth difference gear assembly 3 and the first and second stages planetary gear assemblies 1 and 2 are assembled to form a movement transmission mechanism between the motor 100 and a subsequent actuator.

Still referring to Fig. 2, the movable gear 33 has, at its side away from the planetary gear 32, a shaft 36 extending from the housing support 34 as an output shaft of the entire gear driving device. As shown in the figure, the movable gear 33 is supported on the housing support 34 through an installing bearing 35 disposed on the shaft 36 and located within the housing support 34. The installing bearing 35 is a ball bearing.

Preferably, said installing bearing 35 is a composite bearing. The composite bearing is usually made of Teflon and bronze powder by winding and rolling, and has the advantage of large bearing capacity.

Referring to Fig. 2 in combination with Fig. 1, as a preferable embodiment of the present invention, a liner 5 is arranged between the small tooth difference gear assembly 3 and the second stage planetary gear assembly 2 directly associated with the assembly 3. The liner 5 may be installed on the output shaft 23 of the second stage planetary gear assembly 2, and may, at its two axial sides, respectively bear against the planetary carrier 21 of the second stage planetary gear assembly 2 and an end cover or projection of a housing 4.

In this way, said liner 5 may fix the positions of the planetary gear assemblies 1 and 2 in the axial direction, preventing these assemblies 1, 2 from swinging and displacing, so as to reduce friction and lengthen the service life of the components.

Preferably, the liner 5 may be in the form of an oil bearing. The oil bearing may be made by powder metallurgy method as usual.

Advantageously, the driver gearbox 200 of the present invention may be made of metal material or plastic material. This means that each component of said first and second gear assemblies 1 and 2 as well as said small tooth difference gear assembly 3 may be of metal or plastic.

At the end, it shall be pointed out that the motor 100 is preferably an electric motor.

## Claims

1. A gear driving device for automotive movable parts, comprising a motor and a driver gearbox, **characterized in that** the driver gearbox comprises multiple stages of planetary gear assemblies connected in series and a small tooth difference gear assembly, wherein a first stage planetary gear assembly in the multiple stages of planetary gear assemblies is connected to the motor, and the last stage planetary gear assembly in the multiple stages of planetary gear assemblies is connected to the small tooth difference gear assembly.

2. The gear driving device according to claim 1, **characterized in that** said last stage planetary gear assembly comprises a planetary carrier in the form of a disc, a plurality of gears arranged circumferentially on a side of the planetary carrier, and an output shaft arranged on the other side of the planetary carrier, the output shaft has, at its free end, an eccentric shaft section offset relative to the centre of the planetary carrier, the eccentric shaft section is directly connected to said small tooth difference gear assembly.

3. The gear driving device according to claim 2, **characterized in that** a liner is disposed between said small tooth difference gear assembly and said last stage planetary gear assembly, the liner is positioned on the output shaft of the last stage planetary gear assembly, and abuts the planetary carrier of the last stage planetary gear assembly.

4. The gear driving device according to claim 3, **characterized in that** the liner is formed by an oil bearing.

5. The gear driving device according to any one of claims 1 to 4, said small tooth difference gear assembly comprises a fixed gear, a movable gear, and a planetary gear engaged simultaneously to the fixed gear and the movable gear, wherein an output shaft of the movable gear is supported by an installing bearing on a housing support of the small tooth difference gear assembly.

6. The gear driving device according to claim 5, **characterized in that** said installing bearing is a composite bearing.

7. The gear driving device according to claim 5, **characterized in that** said fixed gear has 22 teeth; said movable gear has 23 teeth; and said planetary gear has 20 teeth.

8. The gear driving device according to any one of claims 1 to 4, **characterized in that** the automotive movable part is a running board or a tonneau cover.

9. The gear driving device according to any one of claims 1 to 4, **characterized in that** said driver gearbox is made of metal material or plastic material.

10. The gear driving device according to any one of claims 1 to 4, **characterized in that** said motor is an electric motor.
